Europäisches Patentamt

European Patent Office

Office européen des brevets

(11) Publication number: **0 485 020 A1**

# EUROPEAN PATENT APPLICATION

(21) Application number: **91202820.6**

(22) Date of filing: **31.10.91**

(51) Int. Cl.5: **G11B 27/10**

(30) Priority: **09.11.90 NL 9002446**

(43) Date of publication of application:
**13.05.92 Bulletin 92/20**

(84) Designated Contracting States:
**AT BE DE FR GB IT**

(71) Applicant: **N.V. Philips' Gloeilampenfabrieken**
**Groenewoudseweg 1**
**NL-5621 BA Eindhoven(NL)**

(72) Inventor: **Dewolf, Jan**
**c/o INT. OCTROOIBUREAU B.V., Prof.**
**Holstlaan 6**
**NL-5656 AA Eindhoven(NL)**
Inventor: **van der Kruk, Willem Leonardus**
**c/o INT. OCTROOIBUREAU B.V., Prof.**
**Holstlaan 6**
**NL-5656 AA Eindhoven(NL)**

(74) Representative: **van der Kruk, Willem**
**Leonardus et al**
**INTERNATIONAAL OCTROOIBUREAU B.V.**
**Prof. Holstlaan 6**
**NL-5656 AA Eindhoven(NL)**

(54) **Device for random-order reproduction of a number of pieces of music recorded on a magnetic record carrier.**

(57) In order to shorten the time between the end location on a record carrier (2) of a reproduced piece of music and the start location on the record carrier of a piece of music to be reproduced next in a device for random-order reproduction of a number of pieces of music from the magnetic record carrier, a selection for the piece of music to be reproduced next is made from a sub-group of pieces of music out of the total number of pieces of music to be reproduced from the record carrier. This sub-group is formed by the group of pieces of music whose start locations are situated in a specific limited zone $(Z_a, Z_v)$ on the record carrier around the end location $(P_1)$ of the piece of music $(T_4)$ reproduced last.

FIG.2

The invention relates to a device for reproducing a number of pieces of music in random order from a magnetic record carrier, which pieces of music are recorded on a side of the magnetic record carrier, the device comprising:

- a first reading means for reading pieces of music from the record carrier,
- a second reading means for reading a Table of Contents from a memory, which Table of Contents comprises the sequence numbers of the pieces of music on the record carrier and location information relating to the start locations of the pieces of music on the record carrier,
- a memory means for storing the information in the Table of Contents read from the memory,
- selecting means for random-order selection of a piece of music from at least a number of the pieces of music recorded on the record carrier,
- transport means for transporting the record carrier with an increased speed relative to the reproduction speed to a location on the record carrier corresponding to the start of the selected piece of music, and in which the
- first reading means is further arranged for reproducing the selected piece of music at reproduction speed.

Random-order reproduction of pieces of music recorded on a record carrier is known as random play or shuffle play, for example, with respect to compact disc digital audio players.

If this feature is used in a device for reproducing a number of pieces of music from a magnetic record carrier, additional measures are necessary to have this feature come out in the best way possible.

Thereto, the device according to the invention is characterized

- in that for reproducing a next piece of music after the reproduction of a previous piece of music, the selecting means are arranged for selecting such group of pieces of music for which the start locations of the pieces of music in the group are situated in a zone in forward and backward directions around the end location of the previous piece of music on the record carrier, using the music location information stored in the memory means, this zone denoting all the locations on the record carrier that can be reached from the end location of the previous piece of music in a certain search time interval with the increased transport speed of the record carrier in forward or reverse direction,

- in that the selecting means are arranged for random selection of a piece of music from said group of pieces of music, and the first reading means is arranged for reproducing the selected piece of music from said group of pieces of music as the next piece of music.

The invention is based on the recognition that during random-order reproduction of pieces of music from a magnetic record carrier sometimes long search times are necessary for changing from the reproduction of a specific piece of music to the reproduction of a next piece of music.

Therefore, according to the invention a group of pieces of music is determined comprising the total number of pieces of music recorded on the record carrier whose start locations on the record carrier are at short distances from the end location of the previous piece of music on the record carrier so as to select the next piece of music from this group. Naturally, for the measure to be effective, these distances are to be distinctly smaller than the overall length of the record carrier.

According to the invention the length of the zone is preferably smaller than or equal to 50% of the overall length of the record carrier. The length of the zone is preferably equal to 25% of the overall length of the record carrier.

Needless to observe that the selection procedure of a next piece of music to be reproduced can constantly be repeated, starting from the end location of the piece of music reproduced prior thereto.

The reproducing device may be a device of the autoreverse type. In that case, when a piece of music is selected, a selection can be made from the pieces of music whose start locations are situated in the zones on the A and B sides.

If it is a matter of a device not of the autoreverse type, a selection can only be made from the pieces of music found on the record carrier side to be read out.

The device may further be characterized in that the selecting means comprise an additional memory for storing sequence numbers of the pieces of music that have already been reproduced once, and in that the selecting means are arranged for selecting a piece of music from a sub-group of pieces of music out of said group of pieces of music, which sub-group comprises the pieces of music that have not yet been reproduced. This avoids a piece of music being reproduced for the second time.

In addition, the invention may be characterized in that the selecting means are arranged for detecting that all the pieces of music in a group of pieces of music have already been reproduced once, and in that on detection the selecting means are arranged for selecting a piece of music that has not yet been reproduced from outside this group of pieces of music. This achieves that the device stops reproducing or otherwise ends in a deadlock the moment all the pieces of music in the group have been reproduced once. The device can then continue to carry out the procedure by making a forced selection from outside the group of pieces of music valid at that moment.

Preferably, the piece of music outside the group of pieces of music is selected whose start location is nearest to the end location of the piece of music reproduced directly prior thereto. In this manner the transport time to the newly selected piece of music is kept smallest possible.

The device may further be characterized in that the first reading means further includes a buffer for bridging the transport time gap from the end location of a piece of music to be reproduced to the start location of a piece of music to be reproduced next. In that case the buffer is preferably arranged for storing audio information having a maximum length of the search time interval.

The invention will be further explained with reference to the description of the following drawing Figures, in which:

Fig. 1 shows an exemplary embodiment of the device,

Fig. 2 shows the method of the device for random selection of pieces of music on a magnetic record carrier, and

Fig. 3 shows a further embodiment of the amplifier circuit in the device.

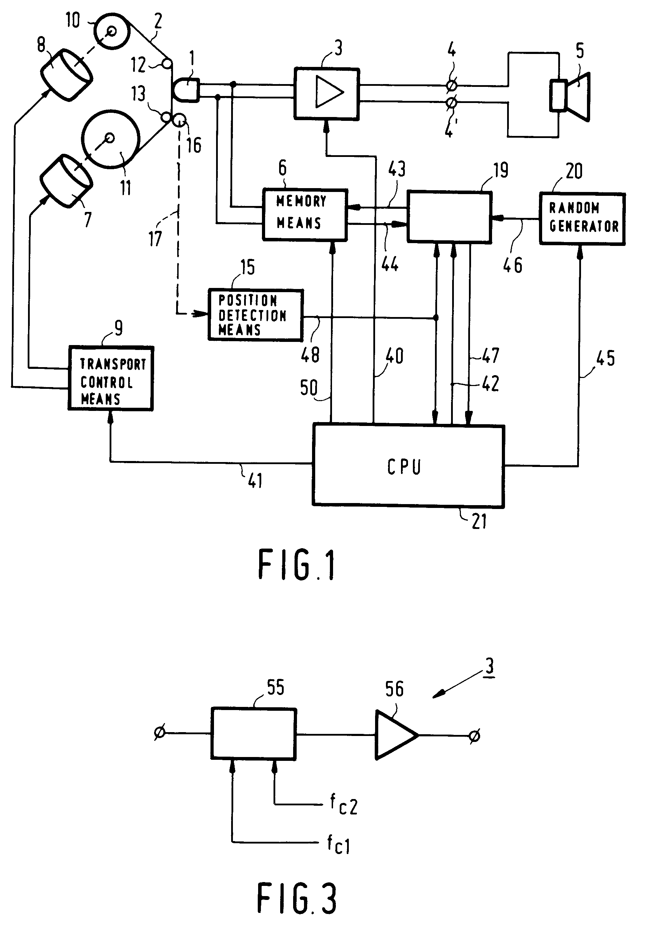

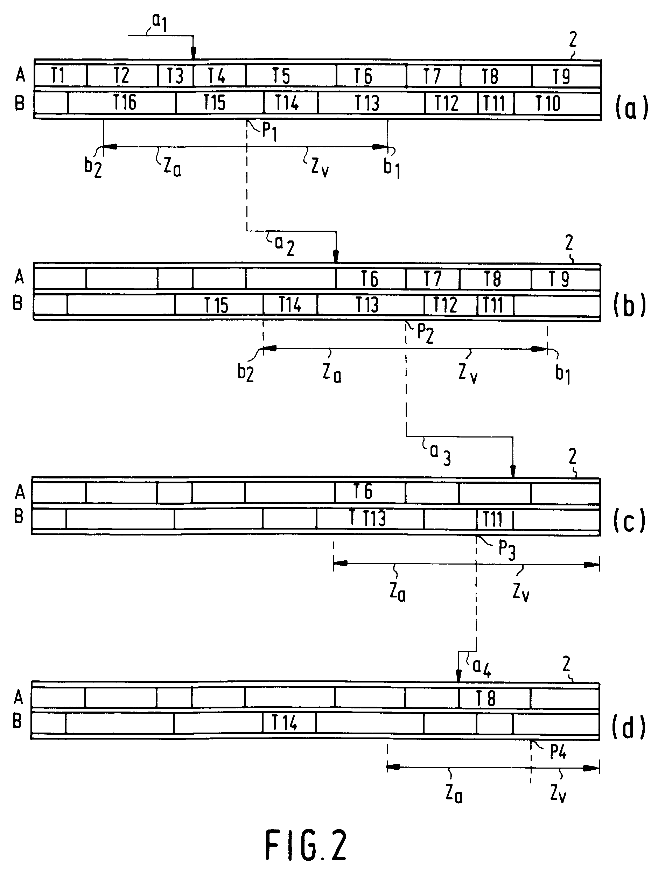

Fig. 1 shows a diagram of the device according to the invention. The device comprises a (first) reading means 1, in the form of a read head, for reading pieces of music recorded on the record carrier from the record carrier 2. Fig. 2a shows an example of a record carrier 2 with pieces of music recorded on both the A and B-sides of the record carrier. In this example a total of sixteen pieces of music $T_1$ to $T_{16}$ are recorded on the record carrier 2, whose A-side accommodates the first nine pieces of music and the B-side the remaining seven. Although only a single track is shown on either one of the two sides, it will be self-evident that either one of the two sides accommodates two tracks beside one another for recording a stereo signal.

The read head 1 is electrically coupled to an amplifier circuit 3. A loudspeaker 5 may be connected to the output 4-4' of the amplifier circuit so that the pieces of music reproduced from the record carrier can be made audible.

The device further includes a memory means 6 for storing a Table of Contents (TOC) comprising sequence numbers of the pieces of music on the record carrier (track numbers) and comprising location information relating to the start locations of the pieces of music on the record carrier. This location information may be stated, for example, in the form of an absolute time denoting the transport time necessary for attaining the start location of the piece of music concerned starting from the beginning of the record carrier at reproduction speed.

The location information may also occur in the form of counts of a counter denoting the counts belonging to the start locations of the pieces of music on the record carrier measured from the beginning of the record carrier.

This Table of Contents may be recorded on the record carrier 2 itself. In European Patent Application EP 29 946 is disclosed, for example, that such a Table of Contents is recorded at the beginning of the record carrier in a section laid out for this purpose.

If, for example, a device of the SDAT type is concerned, either one of the two sides of the record carrier comprises 20 tracks beside one another in the longitudinal direction of the record carrier, for recording the digital music information, and an additional auxiliary track, *cf.* for this purpose the book entitled "The Art of Digital Audio" by J. Watkinson, Focal press, 1988, chapter 9.20. This auxiliary track accommodates the Table of Contents and the information in the Table of Contents may be read out and stored in the memory means 6 by means of a multiple read head, for example, of the MRH type. Dutch Patent Application No. 90.00.039 (PHN 13.209) discloses an arrangement according to a novel digital compact cassette standard in which eight parallel tracks for recording digital audio information and an additional auxiliary track are introduced on either one of the two sides of the cassette. Aforesaid Table of Contents is recorded in the auxiliary track.

The Table of Contents may also be stored in a separate memory, for example, a solid-state memory which is provided on the cassette which comprises the record carrier. In that case a separate (second) reading means (not shown) is necessary for reading the information from the memory. Such a construction is described, for example, in American Patent Specifications Nos. 4,338,644 and 4,383,285 (both in the name of Staar) and European Patent Application No. 373,718 (PHO 88.513) in the name of Applicants.

The device further includes tape transport means. The transport means in this example comprise reel motors 7 and 8 and a control circuit 9. In this example only the motors 7 and 8 are assumed to provide the transport. Alternatively, it is possible that a capstan cooperating with a hold-down roller is present, the reproduction speed being realised by the rotation of the capstan.

During reproduction of a piece of music from the A-side the record carrier 2 is transported from a first reel 10 over guide rolls 12 and 13 to a second reel 11. If, in addition, the device is one of the autoreverse type, the record carrier 2 will be transported in reverse direction from reel 11 to reel 10 when a piece of music is reproduced from the B-side. The playback head 1 is thereto rotated until the head is positioned relative to the tracks of the B side, or the reading means 1 comprises a fixed positioned double playback head whose one section is positioned relative to the tracks on the A-side and whose other section is positioned relative to the tracks on the B side. The change-over from reading the A-side to reading the B-side is then realised electrically.

Position detecting means (15, 16, 17) are arranged for detecting the position of the playback head seen in longitudinal direction of the record carrier. These detecting means may be realised in various ways. Fig. 1 shows a trailing wheel 16 trailing the transport of the record carrier 2 and cooperating with a tachogenerator (not shown). Such a tachogenerator produces tachopulses during rotation of the trailing wheel which tachopulses are applied to a counter 15 over a line 17.

If the count at the beginning of the record carrier is reset to zero, the count is then a measure for the position of the playback head, seen in longitudinal direction of the record carrier, relative to this record carrier.

Other position detecting means are described, for example, in German Patent Applications 27.30.134, 28.53.025 and 29.51.816 (Staar).

The device further includes selecting means (19, 20) comprising a random generator 20 and computing means 19. The whole is controlled in response to control signals produced by a central processing unit 21.

The operation of the device will be explained with reference to Fig. 2. As explained hereinbefore, the memory means 6 comprises the sequence numbers of the sixteen pieces of music recorded on the record carrier 2 as is shown in Fig. 2a, and also the location information (in the form of "times", "addresses" or "counts") denoting the start locations of the pieces of music.

Fig. 2a shows by means of arrow $a_1$ that the device transports the record carrier to the start location of the fourth piece of music $T_4$ in the fast forward mode, that is to say, at a speed increased relative to the reproduction speed, and changes to reproduction speed in forward direction (from left to right in the drawing Fig. 2a). The fourth piece of music is now reproduced till the end in response to control signals applied by the central processing unit 21 to the amplifier 3 and the transport control means 9 over the lines 40 and 41.

The memory means 6 comprises the Table of Contents and the computing means 19 can now apply a control signal to memory means 6 over the line 43 in response to a control signal applied to the means 19 over the line 42. This memory means 6 then applies the location information corresponding to the start location $P_1$ of the fifth piece of music to the computing means 19 over the line 44. Based on this location $P_1$ the computing means 19 now determines the zone of record carrier locations around the location $P_1$ which can be reached as a maximum by the transport means 7, 8 and 9 in a certain time interval $\Delta T$ and at a speed $V_h$ equal to the tape speed in the fast forward or fast rewind mode.

The time interval $\Delta T$ is smaller than or equal to the time necessary for transporting the record carrier over 80% of its total length at increased speed $V_h$. The time interval $\Delta T$ is preferably smaller than or equal to the time necessary for the record carrier to be transported over 50% of its total length at speed $V_h$. In the example shown in Fig. 2 $\Delta T$ is equal to the time necessary for transporting the record carrier over 25% of its total length at increased speed $V_h$. The zone is shown in Fig. 2a in forward and backward directions by means of arrows $Z_v$ and $Z_a$ respectively.

The computing means 19 computes the locations $b_1$ and $b_2$ denoting the zone boundaries. Subsequently, the computing means 19 derives from the location information stored in the memory means 6 and the locations $b_1$ and $b_2$ the group of pieces of music whose start locations are situated within the zone boundaries $b_1$ and $b_2$. In the example shown in Fig. 2a they are the pieces of music $T_3$, $T_4$, $T_5$, $T_6$, $T_{14}$, $T_{15}$ and $T_{16}$. In response to a control signal applied to the random generator 20 over the line 45 the generator generates a selection signal over the line 46 on the basis of which signal a random selection is made from above (first) group of pieces of music to be reproduced.

The computing means 19 preferably comprises a memory storing the pieces of music already reproduced. This memory 6 contains at least the sequence number of $T_4$. This is advantageous because in that case the selection of (again) the fourth piece of music is avoided for the selection of the next piece of music.

Fig. 2b shows the selection of the sixth piece of music $T_6$. The location information corresponding to the start location of the piece of music $T_6$ is applied to the central processing unit 21 over the line 47. Because also the actual position of the playback head 1 is applied to the central processing unit 21 over the line 48, the central processing unit 21 can drive the transport control 9 over line 41 so that from the end location of the piece of music $T_4$ a change-over is made to the fast forward mode at the speed $V_h$ to the start location of the piece of music $T_6$ where the reproduction speed is changed back to. This is shown by means of arrow $a_2$. The piece of music $T_6$ is reproduced in response to control signals over the lines 40 and 41.

The procedure is now repeated. This is to say, the computing means 19 reads the location information about the start location of the next (seventh) piece of music $T_7$ from the memory means 6. This is the location $P_2$ in Fig. 2b. Subsequently, the zone $Z_v$, $Z_a$ around this location is determined and also the pieces of music whose start locations are situated within the zone boundaries $b_1$ and $b_2$. They are the pieces of music $T_6$ to $T_9$ and $T_{11}$ to $T_{15}$, cf. Fig. 2b. This (second) group of pieces of music is used for another selection of a piece of music by means of the random generator 20. The sequence number of the piece of music $T_6$ is again stored in the memory associated to the computing means 19 so that this piece of music cannot be selected again. Fig. 2c makes clear that the eleventh piece of music $T_{11}$ is selected.

The record carrier 2 is again transported to the start location of $T_{11}$, cf. arrow $a_3$ in the fast forward mode at the speed $V_h$. A change is made to the reproduction speed in the reverse mode so that the piece of music $T_{11}$ can be reproduced. The procedure is now repeated again. The zone $Z_a$, $Z_v$ around the end location $P_3$ of the piece of music $T_{11}$ is again determined. This zone includes the start locations of the pieces of music $T_6$ to $T_{13}$, cf. Fig. 2c. From these pieces of music the pieces of music $T_6$ and $T_{11}$ have already been reproduced. A selection is made from the remaining pieces of music. The piece of music $T_8$ is selected, cf. Fig. 2d.

If the memory associated to computing means 19 has stored which pieces of music have already been reproduced, it may happen that all the pieces of music in a group have already been reproduced once.

Let us take the example shown in Fig. 2d. Once piece of music $T_8$ has been reproduced, a group of pieces of music from which a selection is to be made is again determined. This group comprises the pieces of music $T_7$ to $T_{13}$. Let us assume that all these pieces of music have already been reproduced once. Let us also assume that the pieces of music $T_1$, $T_2$, $T_3$, $T_5$ and $T_{14}$, $T_{15}$ and $T_{16}$ have not yet been reproduced.

The fact that the pieces of music $T_7$ to $T_{13}$ have all been reproduced once means that this is a situation in which the procedure is in a deadlock, although there are still pieces of music not yet reproduced.

The computing means may furthermore be capable of applying a detection signal representing this situation to the central processing unit 21. The central processing unit 21 may now enable the computing means, via control signals over the lines 42 and 50 applied to the memory means 6 and the computing means 19, to select a piece of music not yet reproduced and belonging to a different group, which piece of music then preferably has a start location nearest to the location $P_4$ of the end of the piece of music reproduced last. In the Fig. 2d this is, for example, the piece of music $T_{14}$. Piece of music $T_6$ is not selected here because it had already been reproduced.

During the time interval in which the record carrier 2 is to be transported from the end location of a piece of music just reproduced to the start location of a next piece of music there is a silence in the sound reproduction through the loudspeaker 5.

For bridging this silence the amplifier circuit 3 may comprise a buffer memory 55, cf. Fig. 3. The buffer memory is a first-in first-out memory 55. Such a memory may be of a digital type which is highly suitable for a digital reproduction system such as SDAT or the novel digital compact cassette system. Audio samples read from the record carrier are written in the memory 55 with a specific clock frequency $f_{c1}$ and read out again with a specific clock frequency $f_{c2}$. The clock frequency $f_{c2}$ is constant and, for example, equal to 44.1 kHz.

The storage capacity of the memory 55 is so large that stereo audio information having a maximum length of $\text{Æ}T$ is stored in the memory. When a piece of music is being reproduced, the memory 55 is completely full and the audio samples having equal frequencies $f_{c1}$ and $F_{c2}$ are written in the memory or read out therefrom respectively. If the read head 1 reaches the end location of the piece of music to be reproduced, the last audio samples of the piece of music are written in the memory 55 at that moment, after which the writing in the memory 55 is stopped. Reading the samples from the memory 55 is continued because the memory contains the audio information corresponding to the last $\Delta T$ seconds of the piece of music. Meanwhile, the record carrier 2 is transported to the start location of the next piece of music to be reproduced. The memory 55 is thus (partly) emptied meanwhile because no new audio samples are applied to the input during this time interval. Having arrived at the start location of the next piece of music, the device switches over to a reproduction speed for the record carrier which is slightly higher than the normal reproduction speed. Then the beginning of the next piece of music to be reproduced is read out and written in the memory 55 at this increased transport speed of the record carrier which memory is thereto supplied with a write clock frequency $f_{c1}$ exceeding 44.1 kHz which is in proportion to the increased transport speed. The first audio sample of the piece of music to be reproduced next is stored in the memory 55 directly after the last audio sample of the preceding piece of music. Immediately afterwards, consecutive samples are stored in the memory which actually functions as a shift register. Once the last audio sample of the preceding piece of music has been read from memory 55, the first audio sample of the next piece of music is read out. The search interval is thus bridged and there will be no silence between the two pieces of music to be reproduced.

Because the beginning of the next piece of music to be reproduced is written in the memory with a frequency exceeding 44.1 kHz, the memory 55 is thus filled faster than the audio samples 55 are read out at the output. If there has been detected that the memory is again completely full, the normal reproduction speed is changed to and so is the write clock frequency $f_{c1}$ which is equal to $f_{c2}$.

The clock signals $f_{c1}$ and $f_{c2}$ may be applied to the buffer memory 55 by the central processing unit 21 over the line 40.

Furthermore, it may be observed that, once the next (or a later) piece of music has been selected, the record carrier need not of necessity be transported at increased speed to the start location of the next (or later) piece of music. The record carrier may also be transported to the start location of the selected piece of music at reproduction speed, if the end location of the previous piece of music has such a short distance to the start location of the next piece of music that on reproduction the time interval between them is not unacceptable to the listener.

## Claims

1. Device for random-order reproduction of a number of pieces of music from a magnetic record carrier, which pieces of music are recorded on a side of the magnetic record carrier, the device comprising:
   - a first reading means for reading pieces of music from the record carrier,
   - a second reading means for reading a Table of Contents from a memory, which Table of Contents comprises the sequence numbers of the pieces of music on the record carrier and location information relating to the start locations of the pieces of music on the record carrier,
   - a memory means for storing the information in the Table of Contents read from the memory,

   - selecting means for random-order selection of a piece of music from at least a number of the pieces of music recorded on the record carrier,
   - transport means for transporting the record carrier with an increased speed relative to the reproduction speed to a location on the record carrier corresponding to the start of the selected piece of music, and in which the
   - first reading means is further arranged for reproducing the selected piece of music at reproduction speed,
   characterized
   - in that for reproducing a next piece of music after the reproduction of a previous piece of music, the selecting means are arranged for selecting such group of pieces of music for which the start locations of the pieces of music in the group are situated in a zone in forward and backward directions around the end location of the previous piece of music on the record carrier, using the music location information stored in the memory means, this zone denoting all the locations on the record carrier that can be reached from the end location of the previous piece of music in a certain search time interval with the increased transport speed of the record carrier in forward or reverse direction,
   - in that the selecting means are arranged for random selection of a piece of music from said group of pieces of music, and the first reading means is arranged for reproducing the selected piece of music from said group of pieces of music as the next piece of music.

2. Device as claimed in Claim 1, of the autoreverse type, for reproducing in random order a number of pieces of music recorded on an A and a B side of the magnetic record carrier, the second reading means being arranged for reading from the memory the Table of Contents containing the sequence numbers of the pieces of music on the record carrier and location information related to the start locations of the pieces of music on the A and B sides of the record carrier, characterized in that for reproducing the next piece of music the selecting means are arranged for selecting such group of pieces of music on the A and B sides for which the start locations of the pieces of music in the group are situated in a zone in forward and backward directions around the end location of the previous piece of music on the record carrier, using the music location information stored in the memory means, which zone denotes all the locations on the A and B sides of the record carrier that can be reached from the end location of the previous piece of music in a certain search time interval with the increased transport speed of the record carrier in forward or reverse direction.

3. Device as claimed in Claim 1 or 2, characterized in that the memory forms part of the magnetic record carrier and in that the first and second reading means are the same.

4. Arrangement as claimed in Claim 1 or 2, characterized in that the record carrier is included in a cassette and the memory is positioned on the cassette.

5. Device as claimed in one of the preceding Claims, characterized in that the selecting means comprise an additional memory for storing the sequence numbers of the pieces of music that have already been reproduced once, and in that the selecting means are arranged for selecting a piece of music from a sub-group of pieces of music from said group of pieces of music, which sub-group contains the pieces of music that have not yet been reproduced.

6. Device as claimed in Claim 5, characterized in that the selecting means are arranged for detecting that all the pieces of music in a group of pieces of music have already been reproduced once and in that, on detection thereof, the selecting means are arranged for selecting a piece of music that has not yet been reproduced from outside the group of pieces of music.

7. Device as claimed in Claim 6, characterized in that the selecting means are arranged for selecting the piece of music outside the group of pieces of music, whose start location is nearest to the end location of the piece of music reproduced directly prior thereto.

8. Device as claimed in one of the preceding Claims, characterized in that the first reading means further includes a buffer for bridging the transport time from the end location of a piece of music to be reproduced to the start location of a piece of music to be reproduced next.

9. Device as claimed in Claim 8, characterized in that the buffer is arranged for storing audio information having a maximum length of the search time interval.

EP 0 485 020 A1

FIG.1

FIG.3

8

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,D | EP-A-0 029 946 (BASF A.G.)<br>* the whole document * | 1,3,4 | G11B27/10 |
| A | PATENT ABSTRACTS OF JAPAN<br>vol. 12, no. 350 (P-760)(3197) 20 September 1988<br>& JP-A-63 104 283 ( PIONEER ELECTRONIC CORP. ) 9 May 1988<br>* abstract * | 1,5 | |
| A | US-A-4 180 838 (FEHRENKAMP)<br>* the whole document * | 1 | |
| A | GB-A-831 459 (THE RANK ORGANISATION LTD.) | 1 | |
| A | PATENT ABSTRACTS OF JAPAN<br>vol. 13, no. 403 (P-929)(3751) 7 September 1989<br>& JP-A-01 144 284 ( ALPINE ELECTRON INC. ) 6 June 1989<br>* abstract * | 1 | |
| A | JOURNAL OF THE AUDIO ENGINEERING SOCIETY,<br>vol. 32, no. 3, March 1984, NEW YORK, US,<br>pages 114-122; INGEBRETSEN and al.:<br>"Random-Access Editing of Digital Audio"<br>* figure 2; page 116 and 117, chapter 3 * | 1,8,9 | TECHNICAL FIELDS SEARCHED (Int. Cl.5)<br><br>G11B |
| A | PATENT ABSTRACTS OF JAPAN<br>vol. 14, no. 269 (P-1059)(4212) 11 June 1990<br>& JP-A-2 076 170 ( MITSUBISHI ELECTRONIC CORP. ) 15 March 1990<br>* abstract * | 1,8,9 | |

The present search report has been drawn up for all claims

| Place of search | Date of completion of the search | Examiner |
|---|---|---|
| THE HAGUE | 13 FEBRUARY 1992 | F. J. DAALMANS |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)